Europäisches Patentamt

European Patent Office

Office européen des brevets

(11) Publication number: 0 188 387 A2

# (12) EUROPEAN PATENT APPLICATION

(21) Application number: 86300316.6

(51) Int. Cl.⁴: **B 01 D 3/14**

(22) Date of filing: 17.01.86

(30) Priority: 18.01.85 US 692828

(43) Date of publication of application:
23.07.86 Bulletin 86/30

(84) Designated Contracting States:
BE DE FR GB IT

(71) Applicant: GLITSCH, INC.
4900 Singleton Boulevard
Dallas Texas 75212(US)

(72) Inventor: Binkley, Michael J.
Box 416
De Soto Texas 75115(US)

(72) Inventor: Grigson, Walter W.
2438 Cypress
Grand Prairie Texas 75050(US)

(72) Inventor: Chen, Gilbert K.
3404 Brookhaven Club Dr.
Farmers Branch Texas 75234(US)

(72) Inventor: Holmes, Timothy L.
2815 Surrey
Carrollton Texas 75006(US)

(74) Representative: Bowman, Paul Alan et al,
LLOYD WISE, TREGEAR & CO. Norman House 105-109
Strand
London WC2R OAE(GB)

(54) Fractionation column.

(57) Disclosed is a improved fractionation column having structured high efficiency packing therein, and trays or other high pressure drop and high liquid holdup devices therein adjacent at least some input and/or output lines to confine vapor and liquid disturbances attributable to the lines away from the structured high efficiency packing, thereby preserving its efficiency.

Croydon Printing Company Ltd.

## FRACTIONATION COLUMN

### BACKGROUND OF THE INVENTION

Successful fractionation is dependent upon intimate contact between liquid and vapor phases in the fractionating column. Some vapor and liquid contact devices, such as trays, are characterized by relatively high pressure drop and relatively high liquid holdup. With the increased importance of energy considerations, another type of vapor and liquid contact apparatus, namely structured high efficiency packing, has become popular. Such packing is energy efficient because it has low pressure drop and low liquid holdup. However, these very properties at times make columns equipped with structured packing difficult to operate in a stable consistent manner.

### SUMMARY OF THE INVENTION

In accordance with the invention, there is provided an improved fractionation column for separating two or more liquid components having differing relative volatilities. The column has at least a feed input line, an overhead take-off line, a reflux return line, and a bottom take-off line, and is equipped with vapor and liquid contact apparatus therein for effecting said separation through thorough and intimate contact between a generally ascending vapor stream and a generally descending liquid stream.

The vapor and liquid contact apparatus may be divided into two portions. The first portion is formed structured high efficiency packing characterized by low liquid hold-up, low pressure drop, large surface area for vapor and liquid contact, and efficiency-sensitivity to uniformity of vapor and liquid distribution across said surface area.

In the column of the invention, the normal operating conditions are such as to be disruptive to the uniformity of vapor and liquid distribution in structured high efficiency packing in portions of the column adjacent at least some of the feed input line, overhead take-off line, reflux return line and bottom take-off lines.

The second portion of liquid and vapor contact apparatus in the column is positioned adjacent at least some of the lines whereat under said normal operating conditions uniformity of vapor and liquid distribution in structured packing is disturbed. The second portion of liquid and vapor contact apparatus is characterized by high liquid hold-up and high pressure drop and thus provides sufficient resistance and inertia to confine the disruptive conditions away from the first portion of the vapor and liquid apparatus which is structured high-efficiency packing, thus preserving its uniformity of vapor and liquid distribution and high efficiency.

In the fractionation column of the invention it is preferred that the second portion of vapor and liquid contact apparatus is at least one tray, which may be a sieve tray, a valve tray, a bubble cap tray, a chimney tray, or of another design calculated to give good vapor and liquid contact. As many trays as necessary to provide the resistance or inertia needed for disturbance isolation may be used.

In another embodiment of the invention, the fractionation column has a reboiler return line, and normal operating conditions are disruptive to the uniformity of vapor and liquid distribution in said structured high efficiency packing in portions of said column adjacent said reboiler return line, which is remedied by positioning at least part of the second portion of vapor and liquid contact apparatus adjacent the reboiler return line.

Similarly another fractionation column in accordance with the invention has at least one side stream draw-off line, in which normal operating conditions are disruptive to the uniformity of vapor and liquid distribution in the structured high efficiency packing, in portions of said column adjacent the side stream draw-off line and in which the second portion of vapor and liquid contact apparatus is at least partially adjacent the side stream draw-off line.

The first portion of vapor and liquid contact apparatus may be of any desired stuctured high efficiency type such as corrugated lamellas of sheet material with the lamellas being vertically oriented with corrugations of adjacent lamellas criss-crossing. Alternately it may be formed of knitted wire mesh. In the corrugated lamella form of the invention it is preferred that lamellas have perforations therein to aid in liquid and vapor distribution, and further preferred that the lamellas have lancing therethrough. The corrugated lamellas may have other treatments of their surfaces, such as grooves, ridges, embossing, etc., which are regarded by some as improving vapor and liquid distribution. The sheet material of the lamellas may be woven wire cloth or gauze, or expanded metal. Lamellas may be formed of ceramics or plastic resins.

## BRIEF DESCRIPTION OF THE DRAWINGS

Fig. 1 is a diagrammatic cross-sectional elevational view of a fractionation column constructed in accordance with the invention;

Fig. 2 is a diagrammatic cross-sectional elevational view of a column involved in a case study discussed herein below;

Fig. 3 is a diagrammatic cross-sectional elevational view of a pilot plant scale column utilized in another case study discussed hereinbelow; and

Fig. 4 is a plot of temperature against column elevation for a two component feed stream at its bubble point temperature, and for the same feed stream at a temperature producing a 12 weight per cent flashing condition.

DETAILED DESCRIPTION OF PREFERRED EMBODIMENTS

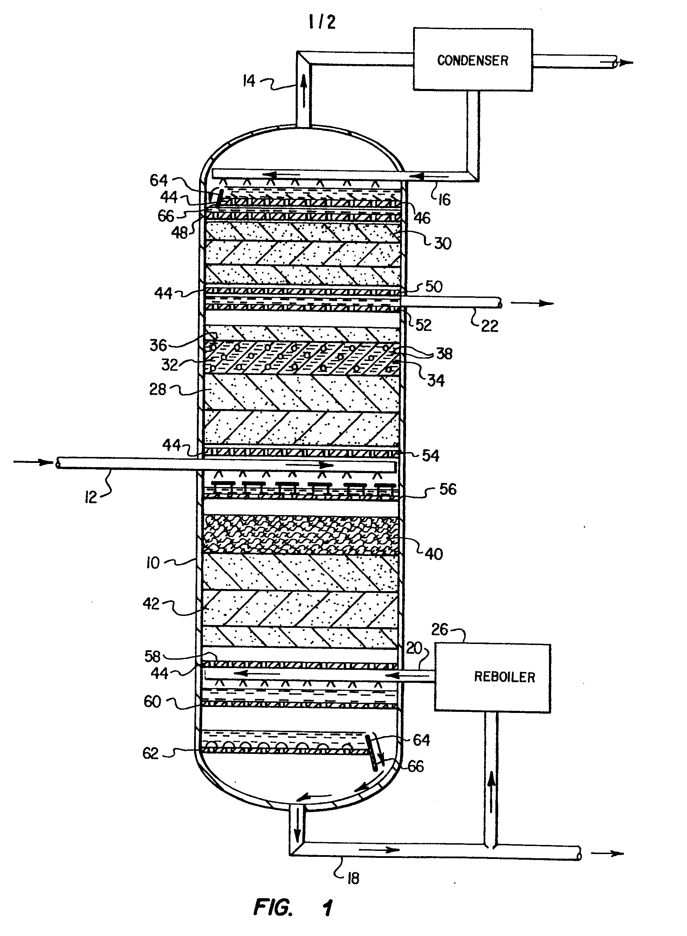

Fig. 1 shows a column 10 for separating two or more liquid components having differing relative volatilities. The column has a feed input line 12, an overhead take-off line 14, a reflux return line 16, a bottom take-off line 18, a reboiler return line 20, and a side stream take-off line 22. It is also equipped with a reflux condenser 24 and a reboiler 26. The column has vapor and liquid contact apparatus 28 therein for effecting said separation through thorough and intimate contact between a generally ascending vapor stream and a generally descending liquid stream. A first portion of said vapor and liquid contact apparatus is structured high efficiency packing indicated at 30. Such packing has low liquid hold-up, low pressure drop, large surface area for vapor and liquid contact, and efficiency-sensitivity to uniformity of vapor and liquid distribution across said surface area.

Several types of high efficiency packings are shown diagrammatically in Fig. 1. At 32, a packing formed of vertically oriented corrugated lamellas 34, with corrugations criss-crossing, is shown. The lamellas have perforations 36 and surface lancings 38. At 40, knitted wire mesh high efficiency packings is shown diagrammatically. The balance of the structured packing in Fig. 1 is indicated by cross-hatching and stippling, as at 42, which may be taken as indicating any of the surface treatments mentioned above.

The normal operating conditions of said column have been discovered to be disruptive to the uniformity of vapor and liquid distribution in structured high efficiency packing in those portions of the column 10 adjacent at least some of the lines that is the feed input line 12, overhead take-off line 14, reflux return line 16, bottom take-off line 18, reboiler return line 20, and side stream take-off line 22.

Column 10 further has a second portion of liquid and vapor contact apparatus 44, therein adjacent at least some of said lines whereat under said normal operating conditions uniformity of vapor and liquid distribution in structured packing is disturbed. In Fig 1 several types of second portion vapor and liquid contact apparatus are shown diagrammatically, including valve tray 46 adjacent overhead take off line 14 and reflux return line 16. Also adjacent such lines is sieve tray 48. Adjacent side stream line 22 are sieve trays 50, 52. In the vicinity of feed input line 12 is sieve tray 54 and chimney tray 56. Near reboiler return line 20 are sieve trays 58, 60, while near bottom draw-off line 18 is bubble cap tray 62. Bubble cap tray 62 and valve

tray 46 are shown with weirs 64 and downcomers 66.

The second portion of liquid and vapor contact apparatus is characterized by high liquid hold-up and high pressure drop to thereby provide sufficient resistance and inertia to confine said disruptive conditions away from said first portion of the vapor liquid apparatus which is structured high efficiency packing, thus preserving its uniformity of vapor and liquid distribution and high efficiency.

Distillation consists of heating, vaporization, fractionation, condensation and cooling. So liquid and vapor contacting plays a pivotal role in distillation operations. Such contacting generally involves the use of either trays or packings. These column internals are employed to bring about as intimate a contact as possible between ascending vapor and descending liquid without too great a reduction in the throughput or capacity of a fractionating column. Consequently, the last thirty years have seen the replacement of bubble caps by sieve and valve trays in most traycolumn designs, and the increasing popularity of packed columns with either random (dumped) or structured packings.

Column packings in general and structured packings in particular have several merits compared to trays. Among the advantages are low liquid holdup for sharpness of separation and low pressure drop for less energy consumption and greater throughput. In packed columns the importance of liquid distribution points upon column performance is recognized. We have discovered that the capability of such column internals in dealing with either subcooled or flashing feed conditions is hampered by the very strengths of such packings. Two case studies presented later herein demonstrate the undesirable effects of subcooled or flashing feed conditions upon the performance of packed columns with structured packings.

## THEORETICAL TREATMENT OF A FEED STAGE

### On Subcooled Feed

In design practice, a process engineer wants a steeper operating line, that is, a larger ratio of reflux to vapor, so that a smaller number of fractionating steps or theoretical stages will be adequate and economical operation-wise, so the energy to bring the feed quality to its bubble point typically comes from the vapor generating from the reboiler. However, subcooled feed will require more vapor from the reboiler than other feed conditions. In other words, subcooled feed drastically alters the internal vapor traffic through the column. A higher vapor rate than otherwise necessary is needed to heat the cold feed to its boiling point. This implies that subcooled feed will require, in principle as well as in practice, more theoretical stages than its bubble point counterpart for a given separation.

Mathematically, the treatment of a subcooled feed stage is predicated upon a fictitious mixing point which would instantly raise the subcooled feed to its boiling state. Implicit in such an assumption is spontaneous and complete realization of turbulence, temperature and timelessness (long contact time). In most trays columns, liquid holdup on the feed tray is indeed substantial to provide long enough residence (contact) time. Furthermore, the interaction of vapor and liquid on the tray is also vigorous and the tray liquid temperature remains relatively constant. So actual tray conditions agree rather well with the assumptions in the mathematical treatment of a subcooled feed.

Under normal operating conditions, packed column liquid holdup is just a fraction of its tray counterpart. An appreciable amount of packing or column length will be needed to accumulate a quantity of liquid holdup equivalent to that of an actual tray. Besides, the implicit turbulent interaction of vapor and liquid typically found on a tray is noticeably absent in a packed column. The lacking of vigorous vapor and liquid contact plus extremely short vapor

0188387

-11-

and liquid interaction time due to low liquid holdup makes less plausible the usual assumption of instant boiling of subcooled feed in one theoretical plate. On the contrary, is more reasonable to expect several theoretical stage equivalents will be necessary in a packed column to heat a subcooled feed to its boiling state.

In some cases, the packing section may approach the hydraulic limit prematurely although the apparent vapor load based upon feed of bubble point temperature is considerably lower. Therefore, action should be taken to preheat the feed temperature as close to its bubble point as possible to reduce the vapor load in the stripping section so that a stable column operation can be sustained. In short, it is not good design practice to use reboiler and packing sections to preheat a cold feedstock.

We have found that by interposing a higher resistance vapor and liquid contact apparatus, such as a tray, just below the feed line entry point, and above the packing in the lower reaches of the column, the deleterious effect of subcooled feed can be largely overcome.

On Flashing Feed

Likewise, an instant mixing of the flashed vapor into the column vapor flow without any disturbances of vapor flow pattern is assumed to when a flashing feed is introduced through a properly designed feed distributor. In practice, the introduction of a flashing feed is usually directed downward via a number of orifices or slots countercurrent to the column vapor traffic. Normally, the velocity head of the flashed vapor fraction leaving the distributor is at least one order of magnitude, that of column vapor flow. As mentioned earlier, no disturbance of vapor flow pattern in the column is implied in the theoretical treatment of a flashing feed. In a tray column, each tray typically exerts about 3 to 8 mm Hg of pressure drop, which is many orders of magnitude greater than the velocity head of the flashed vapor alone. So, the resistance imposed by the tray, either above or below the feed point, is more than enough to eliminate or smooth out any downward or upward disturbances during the mixing of two vapors. In other words, any potential propagation of disturbance to other portions of a tray column is contained by either a tray above or below the feed. Simply put, the assumption of an instant mixing of flashed vapor in column vapor flow is realistic in a tray column.

Conversely, a packed column with high peformance structured packings exerts roughly a pressure drop of ½ to 2 mm Hg per meter of packed height under normal fractionation column operating conditions. Such a pressure drop is too little a resistance to prevent the disturbance propagation generated by the flashing feed introduction deep into packed sections below or above the feed point. We have found resistance created by artificial means may advantageously be incorporated to confine either downward or upward disruption of uniform vapor flow pattern in a packed column. Since uniform distribution of both liquid and vapor is essential for efficient operation of a distillation column, proper consideration must be given to flow behavior in the distributor as well as flow conditions upstream and downstream of the distributor to obtain optimum fluid flow distribution.

CASE STUDY NUMBER ONE: SUBCOOLED FEED

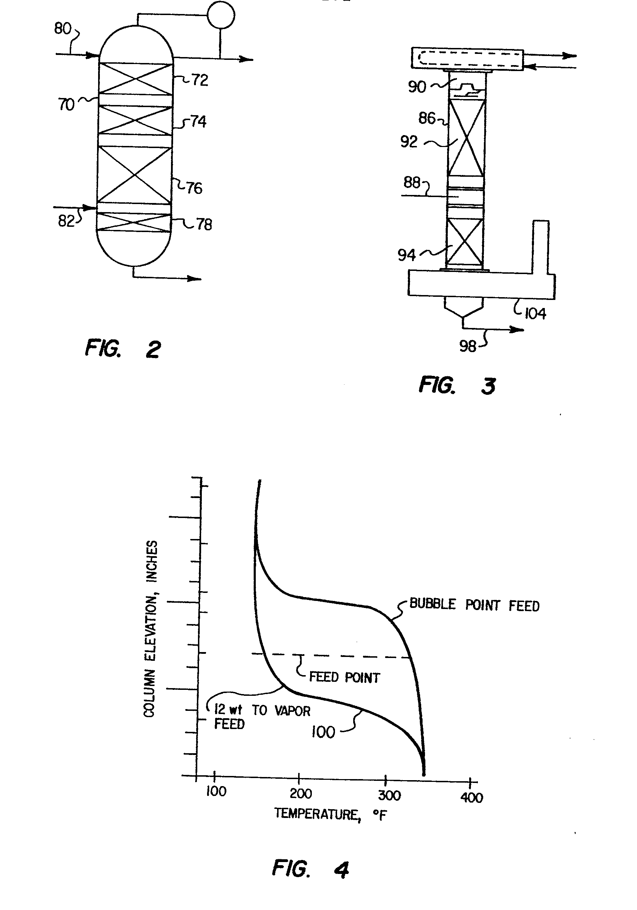

A tray column, 8.5 ft. (2.6 meters) in diameter, was revamped with four (4) beds of the so-called GEMPAK™ 3A/4A Structured Packings, (sold by Glitsch Inc.), totalling 64 ft. (19.5 meters) for product purity improvement and energy savings. This structured packing is formed of sheets of corrugated lamellas having perforations and a lanced surface, with the corrugations of adjacent sheets in crisscrossing relationship. The column flow schematic is shown in Figure 2. In Fig. 2 column 70 is provided with four beds 72, 74, 76, 78.

There are two feed streams 80, 82, one at the top and one between Beds 76 and 78, to the column. Each stream contains 15 chemicals. The bottom product specification calls for less than 90 ppm of lights which consists of the first 13 components. The lower feed stream contains about 0.5 wt. % of lights.

Based upon computer simulation, nine (9) theoretical plates were necessary for the desired separation. During the first few weeks of plant operation, the lower feed temperature was kept at 75· C. below bubble point. The bottom product could not make on-specification product. It contained more than 250 ppm of lights regardless of any attempts to increase the reflux ratio to improve the yield. The number of theoretical stages available was estimated at only four (4). Finally, a preheater was installed to heat the feed temperature to is bubble point of 150·

Immediately the column became more responsive to change in reflux ratio, and stable. At the same time, the lights concentration in the bottom product was reduced to less than 60 ppm, giving rise to a total of ten (10) theoretical stages for Bed 78. Table 1 lists the column performance before and after preheating the feed.

Alternately, and in accordance with the invention, the same sort of improvement can be obtained by interposing a higher resistance vapor and liquid contact apparatus, for example a tray, below the lower feed input point, but adjacent to it.

---

TABLE 1.  EFFECTS OF FEED TEMPERATURE ON COLUMN PERFORMANCE

CASE STUDY NUMBER ONE

Basis:  Upper Feed = 29,500 kg/hr at 120° C.
Lower Feed = 18,200 kg/hr

Reflux Flow = 30,900 kg/hr
Distillate Flow = 7,400 kg/hr

| | | | |
|---|---|---|---|
| Lower Feed Temperature, °C. | 75 | 120 | 150 |
| No. of Theoretical Stages (TS) Available (Bed 76) | 4 | 8 | 10 |
| Bottom Lights Components, ppm | 280 | 100 | 55 |
| Pressure Drop/TS, mmHg | 2.2 | 0.85 | 0.70 |
| Vapor Flow Through Bed 76, F-Factor, $\frac{M}{S} \sqrt{\frac{kg}{M^3}}$ | 2.4 | 2.0 | 1.6 |

---

CASE STUDY NUMBER TWO:  FLASHING FEED

Continuous distillation test with a 6" (152 mm.)

diameter pilot plant column, packed with two beds of GEMPAK 4A, structured packing carried out to evaluate the impact of feed introduction means on packed column performance. Both bubble point and 12 wt. % of vapor feeds were employed in the study.

In these tests, the feeds were introduced to the column through a 1½" (38 mm.) diameter horizontal pipe, across the diameter of the column, with a ½" (13 mm.) wide slot along the bottom of this feed distributor. A simplified schematic of the pilot plant is given in Figure 3. In Fig. 3 the pilot plant scale column 86 has a slotted feed line 88, three beds 90, 92, 94 of structured packing, overhead takeoff 96, and bottom takeoff 98. The feed is preheated to the desired condition and introduced to the column through the slotted pipe distributor.

The feed to this column is comprised of two aromatic hydrocarbons with properties as given in Table 2. The feed contained 48 wt. % of light Component A and 52 wt. % of heavy Component B. The objective of these tests is to separate these two components at a column top pressure of 68 mmHg absolute into an overhead stream containing less than 100 ppm by weight of heavy Component B and a bottom stream containing less than 100 ppm by weight of light Component A.

| TABLE 2. PHYSICAL PROPERTIES OF FEED CASE STUDY NUMBER TWO | | |
|---|---|---|
| SUBSTANCE | NORMAL BOILING POINT, ·C. | LIQUID SPECIFIC GRAVITY |
| A | 136.1 | 1.11 |
| B | 251.7 | 1.25 |

Column temperature profiles for both bubbble point and 12 wt. % flashing feeds are shown in Figure 4. The profiles 100 for the 12 wt. % vapor flashing feed case is much different from the profile 102 for the bubble point case, although top and bottom temperatures are approximately the same. The much more gradual change of temperature profile for the 12 wt. % vapor flashing feed is the result of the disturbance caused by the two-phase feed. In essence, the light Component A was pushed down 7 ft. (2.1 meters) into the packing below the feed point and was dangerously close to breaking through into the reboiler 104. In other words, the bubble point feed, directed downward, caused no apparent disturbance to the temperature profile in the bottom bed. The gas-liquid feed, however, introduced in the same manner, caused a significant disturbance which propagated downward through the packing below the feed. Although specification product was produced even in the 12 wt. % vapor flashing feed case with a larger reflux flow to vapor ratio, a carefully designed chimney tray installed immediately below the flashing feed distributor stopped the troublesome disturbance.

## CONCLUSION

Thus it can be seen that show the most touted properties- low liquid holdup and low pressure drop - of structured  packings give rise to the least desired impact upon a packed column operation when either subcooled or flashing feed is employed.  Corrective steps to overcome those problems included preheating of the subcooled feed, and in accordance with the invention, mechanical means such as a tailor-made feed tray to obtain a uniform vapor flow pattern in the column, which is especially useful when flashing feeds are considered.  These remedial methods have proven to be effective to render a robust, forgiving column operation most desired by plant production personnel.

WE CLAIM:

1. A fractionation column for separating two or more liquid components having differing relative volatilities, said column having at least a feed input line, an overhead take-off line, a reflux return line, and a bottom take-off line; said column further having vapor-liquid contact apparatus therein for effecting said separation through thorough and intimate contact between a generally ascending vapor stream and a generally descending liquid stream;

a first portion of said vapor and liquid contact apparatus being structured high efficiency packing characterized by low liquid hold-up, low pressure drop, large surface area for vapor and liquid contact, and efficiency-sensitivity to uniformity of vapor and liquid distribution across said surface area;

the normal operating conditions of said column being such as to be disruptive to the uniformity of vapor and liquid-distribution in said structured high efficiency packing in portions of said column adjacent at least some of said feed input line, overhead take-off line, reflux return line and bottom take-off line;

said column further having a second portion of liquid-vapor contact apparatus therein adjacent at least some of said lines whereat under said normal operating conditions uniformity of vapor and liquid distribution in structured packing is disturbed, said second portion of liquid and vapor contact apparatus being characterized by high liquid hold-up and high pressure drop to thereby provide sufficient resistance and inertia to confine said disruptive conditions away from said first portion of the vapor and liquid apparatus which is structured high-efficiency packing, thus preserving its uniformity of vapor and liquid distribution and high efficiency.

2. A fractionation column in accordance with Claim 1 in which said second portion of vapor liquid contact apparatus is at least one tray.

3. A fractionation column in accordance with Claim 2 in which said tray(s) is a sieve tray.

4. A fractionation column in accordance with Claim 2 in which said tray(s) is a valve tray.

5. A fractionation column in accordance with Claim 2 in which said tray(s) is a bubble cap tray.

6. A fractionation column in accordance with Claim 2 in which said tray(s) is a chimney tray.

7. A fractionation column in accordance with Claim 1 in which said column has a reboiler return line, in which normal operating conditions are disruptive to the uniformity of vapor and liquid distribution in said structured high efficiency packing, in portions of said column adjacent said reboiler return line, and in which said second portion of vapor liquid contact apparatus is at least partially adjacent said reboiler return line.

8. A fractionation column in accordance with Claim 1 in which said column has at least one side stream draw-off line, in which normal operating conditions are disruptive to the uniformity of vapor and liquid distribution in said structured high efficiency packing, in portions of said column adjacent said side stream draw-off line and in which said second portion of vapor and liquid contact apparatus is at least partially adjacent said side stream draw-off line.

9. A fractionation column in accordance with Claim 1 in which said first portion of vapor and liquid contact apparatus is corrugated lamellas of sheet material with said lamellas being vertically oriented with corrugations of adjacent lamellas criss-crossing.

10. A fractionation column in accordance with Claim 1 in which said first portion of vapor and liquid contact apparatus is knitted wire mesh.

11. A fractionation column in accordance with Claim 9 in which said lamellas have perforations therein to aid in liquid and vapor distribution.

12. A fractionation column in accordance with Claim 9 in which said lamellas have lancings therethrough.

13. A fractionation column in accordance with Claim 9 in which the surfaces of said lamellas are grooved, ridged, or embossed.

14. A fractionation column in accordance with Claim 9 in which said lamellas are formed of woven wire cloth or gauze expanded metal, ceramics, or plastic resins.

15. A fractionation column for separating two or more liquid components having differing relative volatilities, said column having at least a feed input line, an overhead take-off line, a reflux return line, a bottom take-off line, a reboiler return line and at least one side stream take-off line.

said column further having vapor and liquid contact apparatus therein for effecting said separation through thorough and intimate contact between a generally ascending vapor stream and a generally descending liquid stream;

a first portion of said vapor and liquid contact apparatus being structured high efficiency packing characterized by low liquid hold-up, low pressure drop, large surface area for vapor and liquid contact, and efficiency-sensitivity to uniformity of vapor and liquid distribution across said surface area;

the normal operating conditions of said column being such as to be disruptive to the uniformity of vapor and liquid distribution in said structured high efficiency packing in portions of said column adjacent at least some of said feed input line, overhead take-off line, reflux return line, bottom take-off line, a reboiler return line and at least one side stream take-off line.

said column further having a second portion of liquid and vapor contact apparatus therein adjacent at least some of said lines whereat under said normal operating conditions uniformity of vapor and liquid distribution in structured packing is disturbed, said second portion of liquid-vapor contact apparatus being characterized by high liquid hold-up and high pressure drop to thereby provide sufficient resistance and inertia to confine said disruptive conditions away from said first portion of the vapor liquid apparatus which is structured high efficiency packing, thus preserving its uniformity of vapor and liquid distribution and high efficiency.

1/2

FIG. 1

FIG. 2

FIG. 3

FIG. 4